# EUROPÄISCHE PATENTSCHRIFT

(11) **EP 1 577 595 B1**
(45) Veröffentlichungstag und Bekanntmachung des Hinweises auf die Patenterteilung: **08.11.2006**
(21) Anmeldenummer: 05002720.0
(22) Anmeldetag: 09.02.2005
(51) Int. Cl.: F16K 31/06

(54) **Magnetventil**
Solenoid valve
Electrovanne

(30) Priorität: 25.02.2004 DE 102004009157
(43) Veröffentlichungstag der Anmeldung: 21.09.2005
(73) Patentinhaber: Nass Magnet GmbH, 30179 Hannover (DE)
(72) Erfinder: Hiddessen, Ralf, 31275 Lehrte/Arpke (DE); Diers, Roy, 30938 Burgwedel (DE); Ossenbrügge, Jan-Peter, 31303 Burgdorf (DE); Leuschner, Werner, 30453 Hannover (DE)
(74) Vertreter: Tetzner, Michael

(56) Entgegenhaltungen:
- EP-A- 0 660 016
- WO-A-94/01708
- DE-A1- 10 034 032
- US-A- 5 333 836
- US-B1- 6 486 761

## Beschreibung

Die Erfindung betrifft ein Magnetventil mit einer Spule, einem Magnetkern, einem Anker, einem Jochrohr, einem Polstück sowie einem Ventilgehäuse.

Beim Zusammenbau des Magnetventils wird die Abdichtung und Verbindung zwischen Polstück und Spule und/oder Polstück und Ventilgehäuse üblicherweise mit Hilfe eines O-Rings realisiert, der zuvor in eine umlaufende Nut eines der beiden zu verbindenden Bauteile eingesetzt wird.

Aus der DE-A-100 34 032 ist ein Magnetventil mit einem eindrückbaren Ventilsitz bekannt. Der Ventilsitz weist zwei umlaufende Ansätze auf, die im Querschnitt eine Art "Tannenbaumprofil" bilden und die sich beim Eindrücken des Ventilsitzes abdichtend in das Ventilgehäuse eindrücken lassen.

Weitere Klemm- Schneidkanten-Verbindungen bei Magnetventilen sind aus der WO-A-94/01708, der US-B-6 486 761 und der US-A-5 333 836 bekannt.

Der Erfindung liegt nun die Aufgabe zugrunde, ein Magnetventil zu schaffen, bei welchem die Abdichtung und Verbindung zwischen Polstück und Spule einfach und kostengünstig herstellbar ist und sich zudem die Stabilität der Spule erhöht.

Erfindungsgemäß wird diese Aufgabe durch die Merkmale des Anspruches 1 gelöst.

Das erfindungsgemäße Magnetventil besteht im wesentlichen aus einer Spule, die einen Spulenkörper aufweist, einem Magnetkern, einem Anker, einem Jochrohr, einem Polstück sowie einem Ventilgehäuse und zeichnet sich dadurch aus, dass das Polstück einen Rohrabschnitt aufweist, wobei der Rohrabschnitt in den Spulenkörper eingeführt wird und zur Führung des Ankers dient und zwischen Spule und Rohrabschnitt eine Klemm-Schneidkanten-Verbindung vorgesehen ist. Bei dieser Art der Verbindung kann auf zusätzliche O-Ringe verzichtet werden.

Durch die Verwendung eines Polrohres, welches in die Spule eingeführt wird, lässt sich die Stabilität der Spule erhöhen, so dass deren Wandung entsprechend dünner ausgebildet werden kann. Die Wicklung der Spule erfolgt zweckmäßigerweise erst dann, wenn das Polrohr in die Spule eingeführt ist. Das Polrohr erleichtert außerdem den Übergang der Magnetfeldlinien zum Anker.

Weitere Ausgestaltungen der Erfindung sind Gegenstand der Unteransprüche.

In einer besonderen Ausführungsform des Magnetventils erfolgt auch die Abdichtung und Verbindung zwischen Polstück und Ventilgehäuse mittels einer Klemm-Schneidkanten-Verbindung.

Gemäß einem bevorzugten Ausführungsbeispiel weist das Polstück wenigstens eine Schneidkante auf, die bei der Verbindung mit der Spule und/oder dem Ventilgehäuse zu einer Verformung von Spule/Ventilgehäuse führt. Die Schneidkante kann dabei beispielsweise durch einen Vorsprung am Polstück gebildet werden, der bei der Verbindung mit der Spule und/oder dem Ventilgehäuse zu einer Verformung von Spule/Ventilgehäuse führt.

Gemäß der erfindungsgemäßen Verbindung kann der zwischen Magnetkern und Anker vorgesehene Luftspalt über die Klemm-Schneidkanten-Verbindung zwischen Polstück und Ventilgehäuse eingestellt werden.

Weitere Vorteile und Ausgestaltungen der Erfindung werden im folgenden anhand der Beschreibung und der Zeichnung näher erläutert.

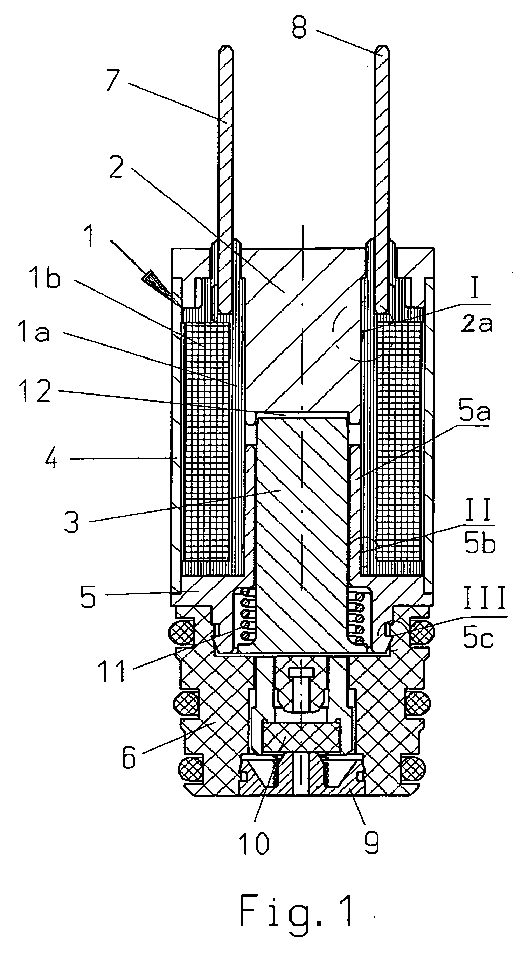

In der Zeichnung zeigen
- Fig. 1: eine schematische Schnittdarstellung des Magnetventils,
- Fig. 2: eine geschnittene Detailansicht (Detail II in Fig.1) der Verbindung zwischen Polstück und Spule,
- Fig. 3: eine geschnittene Detailansicht (Detail III in Fig.1) der Verbindung zwischen Polstück und Ventilgehäuse und
- Fig. 4: eine geschnittene Detailansicht (Detail I in Fig.1) der Verbindung zwischen Anker und Spule.

Das in der Zeichnung dargestellte Magnetventil besteht im wesentlichen aus einer Spule 1, einem Magnetkern 2, einem Anker 3, einem Jochrohr 4, einem Polstück 5 sowie einem Ventilgehäuse 6. Die Spule 1 setzt sich in üblicherweise aus einem Spulenkörper 1a und einer Wicklung 1b zusammen. Die Enden des Wickeldrahtes werden über zwei Anschlussstifte 7, 8 nach außen geführt.

Bei der Herstellung können Magnetkern 2 und Jochrohr 4 oder Polstück 5 und Jochrohr 4 einstückig ausgebildet werden.

Das Polstück 5 weist einen Rohrabschnitt 5a auf, der in den Spulenkörper 1a eingeführt ist und zur Führung des Ankers 3 dient. Das Polstück 5 dient außerdem als Schnittstelle zum Ventilgehäuse 6. Das Polstück ist Teil des Magnetkreises und verbessert den Übergang der Feldlinien zum Anker.

Im Ventilgehäuse 6 ist ein an sich bekannter Ventilsitz 9 und ein mit diesem zusammenwirkendes Dichtungselement 10 vorgesehen. Das Dichtungselement 10 wird im stromlosen Zustand der Spule 1 vom Anker 3 mittels einer Feder 11 auf den Ventilsitz 9 gedrückt. Bei Erregung der Spule 1 wird der Anker 3 vom Magnetkern 2 angezogen, so dass das Dichtungselement vom Ventilsitz 9 abhebt.

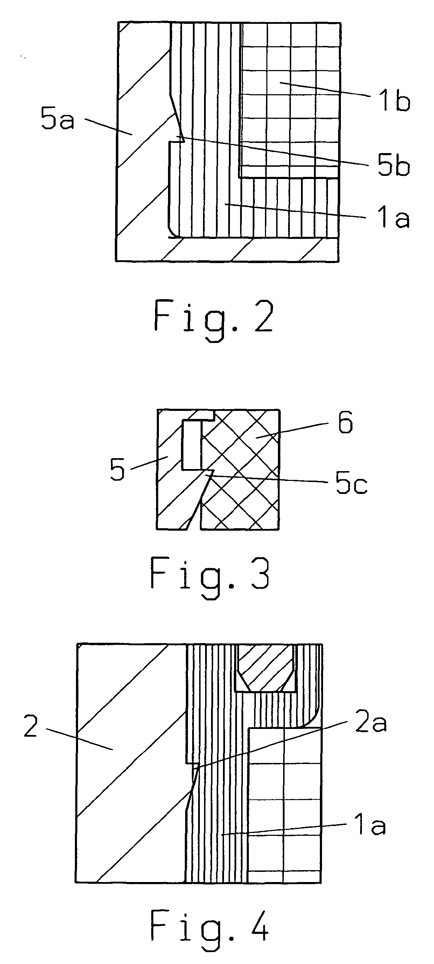

Anhand von Figur 2 wird nun im folgenden die Klemm-Schneidkanten-Verbindung zwischen dem Rohrabschnitt 5a des Polstücks 5 und der Spule näher erläutert. Der Rohrabschnitt 5a weist einen im Querschnitt nasenartigen Vorsprung 5b auf, der eine Schneidkante bildet. Diese über den gesamten Umfang verlaufende Schneidkante führt beim Einführen des Rohrabschnittes 5a in die Spule zu einer Verformung des Spulenkörpers 1a. Die Schneidkante ist dabei so ausgebildet, dass das Einführen erleichtert jedoch das Herausziehen behindert wird. Bei dieser Art von Verbindung ist es dabei von besonderem Vorteil, dass der Rohrabschnitt aus Metall und der Spulenkörper 1a der Spule aus Kunststoff besteht.

Eine ähnliche Verbindung ist in Fig. 4 zwischen Magnetkern 2 und Spulenkörper 1a vorgesehen. Der im Querschnitt nasenartige Vorsprung 2a am Kern 2 ist hier jedoch um 180° gedreht angeordnet, so dass der Kern von oben in die Spule eingeführt wird.

Die Verbindung zwischen Polstück 5 und Ventilgehäuse 6 wird ebenfalls mit einer Klemm-Schneidkanten-Verbindung ausgeführt. Fig. 3 zeigt eine vergrößerte Ansicht dieser Verbindung. Die Schneidkante ist bei diesem Ausführungsbeispiel durch einen im Querschnitt etwa hakenartigen Vorsprung 5c gebildet. Je nachdem wie weit das Ventilgehäuse 6 auf das Polstück 5 aufgeschoben wird, lässt sich der Luftspalt 12 zwischen Anker 3 und Kern 2 gezielt einstellen.

Die Klemm-Schneidkanten-Verbindung fixiert zum einen die beiden Bauteile gegeneinander und gewährleistet eine ausreichende Abdichtung. Auf weitere Dichtungsmittel (beispielsweise O-Ringe), kann dabei verzichtet werden.

Die Abdichtung und Verbindung zwischen Polstück und Spule und/oder Polstück und Ventilgehäuse und/oder Magnetkern und Spule lässt sich auf diese Weise einfach und kostengünstig herstellen.

## Patentansprüche

1. Magnetventil mit einer Spule (1), die einen Spulenkörper (1a) aufweist, einem Magnetkern (2), einem Anker (3), einem Jochrohr (4), einem Polstück (5) sowie einem Ventilgehäuse (6),
**dadurch gekennzeichnet, dass** das Polstück (5) einen Rohrabschnitt (5a) aufweist, wobei der Rohrabschnitt (5a) in den Spulenkörper (1a) eingeführt ist und zur Führung des Ankers (3) dient und zur Abdichtung und Verbindung zwischen Spulenkörper (1a) und Rohrabschnitt (5a) eine Klemm-Schneidkanten-Verbindung vorgesehen ist.

2. Magnetventil nach Anspruch 1, **dadurch gekennzeichnet, dass** auch die Abdichtung und Verbindung zwischen Polstück (5) und Ventilgehäuse (6) mittels einer Klemm-Schneidkanten-Verbindung erfolgt.

3. Magnetventil nach Anspruch 1 oder 2, **dadurch gekennzeichnet, dass** das Polstück (5) wenigstens eine Schneidkante (5b, 5c) aufweist, die bei der Verbindung mit der Spule (1) und/oder dem Ventilgehäuse (6) zu einer Verformung von Spule/Ventilgehäuse führt.

4. Magnetventil nach Anspruch 1 oder 2, **dadurch gekennzeichnet, dass** das Polstück (5) wenigstens eine Schneidkante aufweist, die durch wenigstens einen Vorsprung (5b, 5c) gebildet wird und die bei der Verbindung mit der Spule und/oder dem Ventilgehäuse zu einer Verformung von Spule/Ventilgehäuse führt.

5. Magnetventil nach Anspruch 2, **dadurch gekennzeichnet, dass** zwischen Magnetkern (2) und Anker (3) ein Luftspalt (12) vorgesehen ist, der über die Klemm-Schneidkanten-Verbindung zwischen Polstück und Ventilgehäuse einstellbar ist.

6. Magnetventil nach Anspruch 1, **dadurch gekennzeichnet, dass** die Abdichtung und Verbindung zwischen Magnetkern (2) und Spule (1) auch mittels einer Klemm-Schneidkanten-Verbindung erfolgt.

7. Magnetventil nach Anspruch 1, **dadurch gekennzeichnet, dass** Magnetkern (2) und Jochrohr (4) einstückig ausgebildet sind.

8. Magnetventil nach Anspruch 1, **dadurch gekennzeichnet, dass** Polstück (5) und Jochrohr (4) einstückig ausgebildet sind.

## Claims

1. Solenoid valve having a coil (1), which has a coil body (1a), a magnetic core (2), an armature (3), a yoke tube (4), a pole piece (5) and a valve housing (6),
**characterised in that** the pole piece (5) has a tube portion (5a), the tube portion (5a) being in a state inserted in the coil body (1a) and being used to guide the armature (3), and a clamping-cutting edge connection is provided for sealing and connection between the coil body (1a) and the tube portion (5a).

2. Solenoid valve according to claim 1, **characterised in that** the sealing and connection between the pole piece (5) and the valve housing (6) is also effected by means of a clamping-cutting edge connection.

3. Solenoid valve according to claim 1 or 2, **characterised in that** the pole piece (5) has at least one cutting edge (5b, 5c) which, when the pole piece is connected to the coil (1) and/or to the valve housing (6), leads to a deformation of the coil/valve housing.

4. Solenoid valve according to claim 1 or 2, **characterised in that** the pole piece (5) has at least one cutting edge which is formed by at least one projection (5b, 5c) and which, when the pole piece is connected to the coil and/or to the valve housing, leads to a deformation of the coil/valve housing.

5. Solenoid valve according to claim 2, **characterised in that** an air gap (12) which can be adjusted by means of the clamping-cutting edge connection between the pole piece and the valve housing is provided between the magnetic core (2) and the armature (3).

6. Solenoid valve according to claim 1, **characterised in that** the sealing and connection between the magnetic core (2) and the coil (1) is also effected by means of a clamping-cutting edge connection.

7. Solenoid valve according to claim 1, **characterised in that** the magnetic core (2) and the yoke tube (4) are constructed in one piece.

8. Solenoid valve according to claim 1, **characterised in that** the pole piece (5) and the yoke tube (4) are constructed in one piece.

## Revendications

1. Electrovanne avec une bobine (1), qui présente un corps de bobine (1a), un aimant (2), une ancre (3), un tube de travée (4), une pièce polaire (5) ainsi qu'une boîtier de vanne (6),
**caractérisée en ce que** la pièce polaire (5) présente un segment tubulaire (5a), où le segment tubulaire (5a) est introduit dans le corps de bobine (1a) et sert à diriger l'ancre (3) et est muni, pour l'étanchéification et la liaison, entre le corps de bobine (1a) et le segment tubulaire (5a), d'une liaison de serrage-tranchant.

2. Electrovanne selon la revendication 1, **caractérisé en ce que** l'étanchéification et la liaison entre la pièce polaire (5) et le boîtier de vanne (6) est réalisée à l'aide d'une liaison de serrage-tranchant.

3. Electrovanne selon la revendication 1 ou 2, **caractérisé en ce que** la pièce polaire (5) présente au moins un tranchant (5b, 5c), qui lors d'une liaison avec la bobine (1) et/ou le boîtier de vanne (6) conduit à une déformation de la bobine/boîtier de vanne.

4. Electrovanne selon la revendication 1 ou 2, **caractérisé en ce que** la pièce polaire (5) présente au moins un tranchant, qui est formé par au moins une saillie (5b, 5c) et qui lors de la liaison avec la bobine et/ou le boîtier de vanne conduit à une déformation de la bobine/boîtier de vanne.

5. Electrovanne selon la revendication 2, **caractérisé en ce qu'**entre l'aimant (2) et l'ancre (3), est prévue une fente d'air (12), qui peut être ajustée par la liaison de serrage-tranchant entre la pièce polaire et le boîtier de vanne.

6. Electrovanne selon la revendication 1, **caractérisé en ce que** l'étanchéification et la liaison entre l'aimant (2) et la bobine (1) est réalisée également avec une liaison de serrage-tranchant.

7. Electrovanne selon la revendication 1, **caractérisé en ce que** l'aimant (2) et le tube de travée (4) sont formés d'une pièce.

8. Electrovanne selon la revendication 1, **caractérisé en ce que** la pièce polaire (5) et le tube de travée (4) sont formés d'une pièce.
